Europäisches Patentamt

European Patent Office

Office européen des brevets

(19)

(11) Publication number: **0 084 922**
A2

(12)    ## EUROPEAN PATENT APPLICATION

(21) Application number: 83300009.4

(22) Date of filing: 04.01.83

(51) Int. Cl.³: **B 32 B 27/20**, B 65 D 35/08

(30) Priority: 22.01.82 US 341610

(43) Date of publication of application: 03.08.83
Bulletin 83/31

(84) Designated Contracting States: AT BE CH DE FR GB IT
LI LU NL SE

(71) Applicant: **AMERICAN CAN COMPANY, American Lane,
Greenwich, Connecticut 06830 (US)**

(72) Inventor: **Farrell, Christopher J., 431 So. Evergreen,
Arlington Hts. Illinois 60005 (US)**
Inventor: **Williams, Mark A., 1605 Windsor Dr. No. 307,
Arlington Hts. Illinois 60004 (US)**

(74) Representative: **Harvey, David G. et al, Graham Watt &
Co. Riverhead, Sevenoaks Kent TN13 2BN (GB)**

(54)    **Plastics laminate sheet for making collapsible dispensing containers, collapsible dispensing tube containers and tubular
bodies therefor.**

(57)    A plastic laminate sheet for making collapsible dispensing
container tubes and bodies therefor comprises an outer layer (1)
of filled plastics material made of polypropylene (or high impact
grade polypropylene) or a blend of either with high density
polyethylene. The filler is preferably calcium carbonate. The outer
filled-plastics layer is coextensively bonded to an inner layer (3) of
high density polyethylene to form the laminate sheet. Optionally
the laminate includes a layer of an oxygen barrier plastics
material which may be interposed as layer (9) between the inner
and outer layers (1 and 3) to impart oxygen impermeability to the
laminate. The outer layer (1) can have a grooved surface to
enhance crease retention or «dead-foldability» of the laminate
sheet.

## "PLASTICS LAMINATE SHEET FOR MAKING COLLAPSIBLE DISPENSING CONTAINERS, COLLAPSIBLE DISPENSING TUBE CONTAINERS AND TUBULAR BODIES THEREFOR"

The present invention relates to plastics laminate sheet for making collapsible dispensing containers, collapsible dispensing tube containers and tubular bodies therefor. More particularly, this invention relates to laminated wall constructions for such containers in which there is no metal foil. An all-plastics laminate structure according to this invention can be used for making collapsible dispensing containers or tubes of the type employed for packaging inter alia toothpaste, shaving cream and medicinal ointments.

Collapsible dispensing containers are widely used for packaging pharmaceutical products, dentifrice, cosmetics and toiletries. In the past, such containers were made of plastics or metallic materials. However, as mentioned in US-PS 3,260,410 and US-PS 3,347,419 the plastics containers and the metallic containers which were used in the past had inherent drawbacks. For example, metal containers are costly to produce and often require a protective interior coating in order to protect the metal from attack by acidic or alkaline contents of the containers. Plastics containers, on the other hand, may be relatively inert but permeable, in varying degrees, to moisture, essential oils and other volatile ingredients. In addition, many of the plastics which are suitable for making the containers are permeable to oxygen.

In recent years, collapsible dispensing containers have been made of multiply, plastics laminate structures which include an intermediate layer of a metal foil, e.g. aluminium foil. Typically as described in the aforementioned US-PS 3,347,419, such a laminate structure has an inner layer of a thermoplastic material which in use forms the interior surface of the container. This inner layer is adhesively bonded to an inwardly-facing surface of the foil layer by a suitable adhesive material that should prevent delamination of the layers due to product attack by the container contents. The outwardly-facing surface of the foil layer is coated with a protective layer and a decorative layer is usually applied to the protective layer for aesthetic purposes.

The inclusion of a metal foil layer in laminate structures for use in making dispensing tubes or containers has several disadvantages. Metal

0084922

foils are costly, and more expensive than the plastics materials usually used in making such tubes. Their elimination or replacement with a less expensive substitute, therefore, would decrease the cost per container unit. In addition, and significantly, the inclusion of an intermediate layer of metal foil in the laminate structure complicates the manufacturing process, and slows down the rate of production of such tubes. Thus, and with the advent of high speed machinery and equipment for making collapsible dispensing containers, the elimination of the metal foil layer, or its substitution by a suitable plastics layer, permits production of containers more rapidly and at lower cost.

While in principle an all-plastics laminate structure offers cost advantage and is less complicated to fabricate into collapsible tubes than metal foil-containing laminates, not all plastics materials have been found to be well suited for making such dispensing tubes. The reason is that while metal foil-containing laminate structures exhibit good crease-retention properties, most plastic materials used for making collapsible dispensing tubes exhibit poor crease-retention. This crease-retention ability or so-called "dead fold" property of the laminate structure is a significant consideration for collapsible containers.

The present invention seeks to provide a laminate structure useful for making collapsible containers yet which needs not include a metal foil layer. Preferably, the structure is an all-plastics laminate which exhibits satisfactory and acceptable crease-retention and dead fold characteristics. A desirable consideration is the all-plastics laminate structure should permit dispensing containers to be made at higher rates and less expensively than from metal foil-containing laminate structure.

According to the present invention, there is provided a plastics laminate sheet useful for making collapsible dispensing containers, characterised in that the laminate sheet comprises a first layer of a filled plastics material coextensively bonded to a second plastics layer, the filled plastics material being a polymer selected from polypropylene, high impact grade polypropylene and a blend of polypropylene or high impact grade polypropylene with high density polyethylene, in combination with a filler selected from calcium carbonate, talc,

0084922

mica, glass powder, metal powder and mixtures thereof, the second plastics layer being essentially high density polyethylene.

A preferred laminate sheet has a first layer of polypropylene or a blend of polypropylene and high density polyethylene and incorporates calcium carbonate, mica or talc as a filler. In use of the laminate for packaging, the high density polyethylene layer will face the packaged product.

It is highly desirable to impart oxygen impermeability to the laminate sheet, so an oxygen barrier layer, e.g. a polyester, ethylene-vinyl alcohol copolymer, ethylene-vinyl acetate copolymer, polyacrylonitrile, Saran, nylon, etc. may be interposed between the first and second layers. A suitable adhesive layer is used to bond the oxygen barrier layer to the adjoining layers. SARAN is a registered trade mark.

The laminate sheets described herein have good "dead fold" properties and crease retention comparable to metal foil-containing laminates and may be used to form collapsible dispensing containers more economically and at higher production rates than heretofore possible with metal foil-containing laminates.

Enhanced dead fold characteristics of the laminate sheets can be realized by providing the filled-plastics layer with grooves in its surface opposite to its polyethylene-contacting surface.

The invention also provides a container in the form of a collapsible dispensing tubular body having a thermoplastic headpiece attached thereto, as well as a preformed tubular body for use in fabricating such a container. In each case, the tubular body comprises a laminate of an outer layer of filled plastics material coextensively bonded to an inner thermoplastic layer, the filled plastics material comprising a polymer - selected from polypropylene, high impact grade polypropylene, and polypropylene or high impact grade polypropylene blended with high density polyethylene - in combination with a filler selected from calcium carbonate, talc, mica, glass powder, metal powder and mixtures thereof, the inner plastics layer being high density polyethylene.

Two embodiments of the present invention will now be described by way of example only with reference to the accompanying drawings, in which:

Figure 1 is a sectional view of a laminated sheet made of two plastics layers in accordance with the present invention;

Figure 2 is a sectional view of a folled or rolled up laminated sheet having the same two layers as in Figure 1;

Figure 3 is a sectional view similar to Figure 1 wherein the outer surface is grooved to enhance the dead fold properties of the laminate sheet, and

Figure 4 is a sectional view of another embodiment of the invention illustrating a multiply laminate including an oxygen barrier layer.

The several layers in the drawings are not drawn to scale but are shown with exaggerated thickness dimensions to facilitate illustration.

In the drawings, like reference numerals designate like layers.

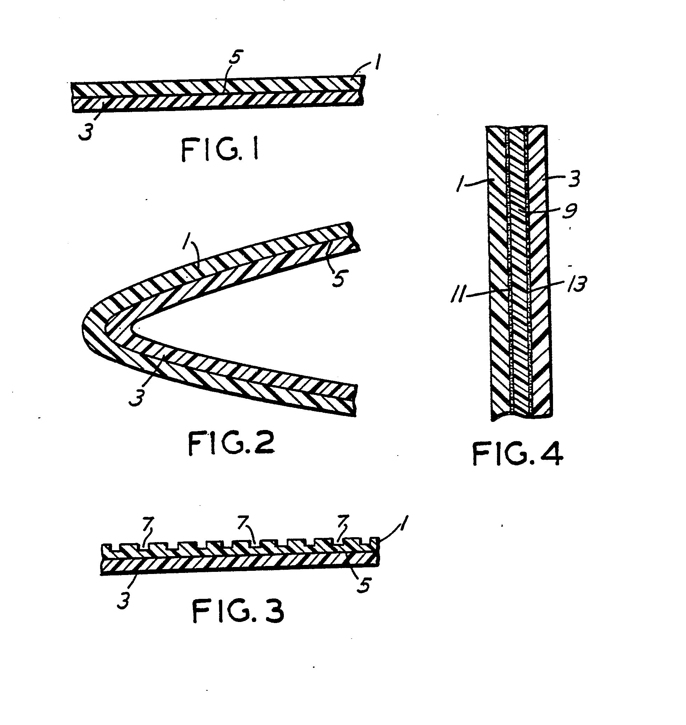

It has now been discovered that all-plastics laminate sheets may be used more advantageously in lieu of metal foil-containing laminates to form collapsible dispensing containers. In Figures 1-3, there are shown laminate sheets made of two plastics layers, i.e., a first plastics layer 1 and a second plastics layer 3 which are melt pressed and bonded to each other along their respective opposing surfaces at 5. When applied to a container, layer 1 will be an outwardly-facing layer and layer 3 will be an inwardly-facing, product-contacting layer. For convenience hereinafter, the layers are called the outer layer (1) and the inner layer (3). As it was previously mentioned, not all plastic materials can be used indiscriminately to form the laminate sheets which are suitable for the purpose of this invention. We have ascertained that several factors must be taken into consideration in selecting the appropriate plastics material for each layer of the laminate sheet.

Thus, the outer layer 1 must have good crease-retention properties and low yield elongation; it must not crack when folding the laminate sheet and must have good adhesion to the inner layer 3 so that the two layers can be melt pressed to form the laminated structure without subsequent delamination.

The inner layer 3, on the other hand, must act as a support for the outer layer; it must serve to transfer outward any strain produced in the laminated sheet upon folding, and must also be capable of adhesion to the outer layer by melt pressing.

The plastics material of choice for the

0084922

inner layer 3 of the laminate sheet is high density polyethylene.

Suitable materials for the outer layer 1 of the laminate sheet in accordance with this invention depends on whether a container is needed in the form of a seamless tube or a tube having a lap seam. If a container tube is to be seamless, filled polypropylene is the material of choice. On the other hand, if the tube should have a lap seam, a filled blend of polypropylene and high density polyethylene is the preferred material. In both instances, the plastics material includes a filler such as calcium carbonate ($CaCO_3$), talc, mica, glass powder, metal powder, or mixtures thereof. Only the outer layer 1 contains a filler.

The filler is preferably surface treated in order to enhance its dispersion in the filled plastic and to obtain superior yield strain properties.

Whether polypropylene is used alone or is blended with high density polyethylene, it is preferable to use isotactic polypropylene rather than the atactic form. Also, impact grade polypropylene may be satisfactorily employed as the outer plastic material. Impact grade polypropylene usually contains a small amount of another comonomer copolymerized therewith. Such impact grade poly-

- 10 -

propylenes are available from several sources including Shell Oil Company and Hercules Powder Company.

The amount of filler incorporated in the outer layer 1 varies from about 5 to about 80 percent by weight, preferably from about 55 to about 65 percent by weight of the filled plastics material. The filler and the plastics material may be blended in different types of blenders such as, for example, an internal mixer, a two roll mill and a twin screw extruder.

The average particle size of the filler may vary over a relatively wide range of from about 1 to about 100 microns, preferably from about 1 to about 10 microns. In most practical applications, the average particle sizes vary over a relatively narrow range of, say, from about 2 to about 4 microns to achieve better uniformity in the filled plastic.

The incorporation of a filler in the plastics material lowers the yield strain level of the outer layer 1. For example, when using polypropylene and $CaCO_3$ to form the plastic-filled layer, the yield strain level of the outer layer was slightly below 2% as compared with a yield strain of about 15% for polypropylene alone. This reduction in yield strain level is a significant consideration in selecting filled plastics for forming the outer layer of the laminate sheets of the present invention.

In one embodiment of the invention, the yield strain elongation of the outer layer 1 is further enhanced by providing this layer with grooved surface as shown in Figure 3. Thus, a plurality of substantially equally spaced grooves 7 may be formed on the surface of the outer layer, for example, by pressing on a grooved plate. These grooves may be formed in the outer layer prior to melt pressing the two layers together or it may be formed after the laminate sheet has been made.

In general, the deeper and narrower the grooves, the more concentrated the strain and the lower the yield strain elongation in the outer layer, and hence, in the laminate sheet.

Where oxygen impermeability is required, the laminate sheet must include an oxygen barrier layer as shown in Figure 4, which illustrates a further embodiment of the invention. The laminate sheet shown in Figure 4 has an outer layer 1 and an inner layer 3 which are the same as the layers 1 and 3 described in connection with Figures 1-3.

As in Figure 3, the outer layer 1 may be grooved as just described.

The laminate sheet shown in Figure 4 includes an oxygen impermeable layer 9 which is selected from plastic materials with known oxygen impermeability. Such plastic materials include polyesters, ethylene-vinyl alcohol copolymers, ethylene-vinyl acetate copolymers, polyacrylonitrile, Saran and nylon. Ethylene-vinyl alcohol copolymers are the preferred plastic materials for use as oxygen barrier.

Further referring to Figure 4, the oxygen barrier layer 9 is coextensively bonded to the outer layer 1 by an adhesive layer 11 and to the inner layer 3 by an adhesive layer 13. Adhesive layers well known in making laminate sheets can be used and they can include copolymers of olefin and an acid of the group consisting of acrylic and alkacrylic acid, and copolymers of ethylene and vinyl ester. Specifically recommended adhesive materials are ethylene-acrylic acid copolymers and ethylene-vinyl acetate copolymers.

In the embodiment shown in Figure 4 the barrier layer (9) is interposed between the outer and inner layers (1,3). The barrier layer may, if desired, be bonded to the surface of the outer layer

- 13 -                    0084922

(1) opposite to the surface thereof contacted by the inner layer (3). As an alternative the barrier layer can be bonded to the inner layer (3), to the surface thereof not contacted by the outer layer (1).

Whether forming the laminate sheet described in connection with the embodiments in Figures 1-3, or the embodiment shown in Figure 4, the thickness of each layer is not per se critical. Typically, however, the thickness of both the outer and the inner layer 1 and 3 is from about 3 to about 7 mils (0.08 to 0.18 mm).

A laminate sheet formed embodying this invention is useful in making collapsible dispensing containers, in accordance with well known methods as described in US-PS 3,260,410; US-PS 3,347,419; US-PS 3,260,777 and US-PS 3,295,725. The disclosure of the aforementioned patents are fully incorporated herein by reference.

The following examples will serve further to illustrate the present invention. It must be understood, however, that these examples are merely illustrative and are not intended to limit the scope of the invention.

### Example I

A laminate sheet was made in which the outer layer was polypropylene (exxon E 612) containing 60 percent by weight of calcium carbonate (pfizer Hi-Pflex). The inner layer of the laminate was high density polyethylene (Chemplex 6001).

The outer layer and the inner layer was each 5 mils (0.13 mm) thick, and were melt pressed to form the laminated structure. This laminated sheet showed poor adhesion between the two layers, indicating that it is not suitable for making tubes having a lap seam due to poor adhesion between polypropylene and polyethylene. However, such laminated sheets are useful for making seamless tubes.

## Example II

The outer layer in this example was 4 mils thick (0.1 mm) and was made of 20% polypropylene (Exxon E 612), 20% high density polyethylene (Chemplex 6001) and 60% calcium carbonate. All percentages are on weight basis.

The inner layer was high density polyethylene (Chemplex 6001) and was 5 mils (0.13 mm) in thickness.

The resulting laminated structure had a deadfold angle of $32^{\circ}$ and is particularly useful in making lap seam tubes because of good adhesion in between the two layers.

The deadfold angle is measured by folding a strip of the laminate sheet back on itself and then releasing it until it comes to equilibrium. The angle between the two parts of the strip is referred to as the deadfold angle.

In general, low angles are indicative of good deadfold properties and laminate sheets having low deadfold angles of about $13^{\circ}$ to about $35^{\circ}$ exhibit satisfactory crease-retention properties.

### Examples III - V

Several laminate sheets were made as in Example I except for the materials of the outer layer. Otherwise, the laminates were the same in all other respects. The results are shown in the following table.

### Table

| Example | Polymer | Source | Melt Index |
|---|---|---|---|
| III | isotactic polypropylene | Hercules 6823 | 0.4 |
| IV | isotactic polypropylene | Exxon 5052 | 1.2 |
| V | high impact poly-propylene* | Shell 7328 | 2.0 |

\* contains small amount of copolymerized comonomer

The laminate sheets had deadfold angles varying from $26^{\circ}$ to $33^{\circ}$ indicating good crease-retention properties.

Claims:

1. A plastics laminate sheet useful for making collapsible dispensing containers, characterised in that the laminate sheet comprises a first layer (1) of a filled plastics material coextensively bonded to a second plastics layer (3), the filled plastics material being a polymer selected from polypropylene, high impact grade polypropylene and a blend of polypropylene or high impact grade polypropylene with high density polyethylene, in combination with a filler selected from calcium carbonate, talc, mica, glass powder, metal powder and mixtures thereof, the second plastics layer being essentially high density polyethylene.

2. A plastics laminate sheet according to claim 1, characterised in that the filler is calcium carbonate.

3. A plastics laminate sheet according to claim 1 or claim 2, characterised in that the first layer (1) is grooved (at 7) on its surface opposite to the surface contacted by the second layer.

4. A plastics laminate sheet according to claim 1, 2 or 3, further characterised by an intermediate layer (9) of oxygen-impermeable material between the first and second layers (1,3), by a first adhesive layer (11) for coextensively bonding the first layer to the intermediate layer, and by a second adhesive layer (13) for coextensively bonding the second layer to the intermediate layer.

5. A plastics laminate sheet according to claim 1 or claim 2, further characterised by an oxygen barrier layer coextensively bonded to the surface of the first layer (1) opposite to the surface thereof contacted by the second layer (3).

6. A plastics laminate sheet according to claim 1 or claim 2, further characterised by an oxygen barrier layer coextensively bonded to the surface of the second layer (3) opposite to the surface thereof contacted by the first layer (1).

7. A plastics laminate according to claim 4, 5 or 6, characterised in that the oxygen barrier layer (9) is selected from polyesters, ethylene-vinyl alcohol copolymers, ethylene-vinyl acetate copolymers, polyacrylonitrile, vinyl chloride-vinylidine chloride copolymers and nylon.

8. A collapsible dispensing container having a laminated plastics, tubular body and a thermoplastic headpiece attached thereto, characterised in that the tubular body comprises a laminate of an outer layer (1) of a filled plastics material

- 18 -    0084922

coextensively bonded to an inner thermoplastic layers (3), the filled plastics material comprising a polymer selected from polypropylene, high impact grade polypropylene, and polypropylene or high impact grade polypropylene blended with high density polyethylene, and a filler selected from calcium carbonate, talc, mica, glass powder, metal powder and mixtures thereof, the inner plastic layer (3) being high density polyethylene.

9. A preformed laminated plastics tubular body for mounting a thermoplastic headpiece thereto, characterised in that the tubular body comprises a laminate of an outer layer (1) of filled plastics material coextensively bonded to an inner thermoplastic layer (3), the filled plastics material comprising a polymer selected from polypropylene, high impact polypropylene and a blend of polypropylene or high impact polypropylene with high density polyethylene, and a filler selected from calcium carbonate, talc, mica, glass powder, metal powder and mixtures thereof, the inner plastics layer being high density polyethylene.

10. A container or a tubular body therefor according to claim 8 or claim 9, characterised in that the laminate includes an intermediate layer (9) of oxygen barrier material, a first adhesive layer (11) coextensively bonding said outer layer (1) to said intermediate layer, and a second adhesive layer (13) for coextensively bonding said inner layer (3) to the intermediate layer.

11. A container or tubular body therefor according to claim 10, characterised in that the oxygen barrier layer (9) is selected from polyesters, ethylene-vinyl alcohol copolymers, ethylene-vinyl acetate copolymers, polyacrylonitrile, vinyl chloride-vinylidine chloride copolymers and nylon.

12. A container or tubular body therefor according to claim 8, 9, 10 or 11, characterised in that the outer layer (1) is grooved (at 7) on its surface opposite to the surface contacted by the inner layer (3).

0084922

1/1

FIG. 1

FIG. 2

FIG. 3

FIG. 4